# EUROPÄISCHE PATENTANMELDUNG

(11) **EP 1 531 095 A1**
(43) Veröffentlichungstag der Anmeldung: **18.05.2005**
(21) Anmeldenummer: 04025345.2
(22) Anmeldetag: 25.10.2004
(51) Int. Cl.: B60R 21/16

(54) **Gassack**

(30) Priorität: 14.11.2003 DE 20317614 U
(71) Anmelder: TRW Automotive Safety Systems GmbH, 63743 Aschaffenburg (DE)
(72) Erfinder: Lorenz, Christian, 63849 Leidersbach (DE)
(74) Vertreter: Kitzhofer, Thomas, Dipl.-Ing.

(57) **Zusammenfassung**

Ein Gassack besitzt eine Außenwand, die eine dem Insassen in aufgeblasenem Zustand zugewandte Frontseite (10), eine Rückseite (12) und eine Umfangsseite (14) hat, und wenigstens eine Einblasöffnung (23), wobei der aufgeblasene Gassack eine sich in Richtung zur Einblasöffnung (23) erstreckende, tiefe, kanalförmige Einbuchtung (16) hat, die nicht mit Druckgas gefüllt wird, und wobei zwischen der Einbuchtung (16) und der Umfangsseite (14) wenigstens eine mit Druckgas zu befüllende Ringkammer (24) gebildet ist. Entfernt vom frontseitigen Beginn der Einbuchtung (26) ist wenigstens ein mit der Außenwand abschnittsweise verbundenes, flexibles Verschlußteil (26) vorgesehen, das bei voll aufgeblasenem Gassack die Einbuchtung zumindest teilweise schließt.

## Beschreibung

Die Erfindung betrifft einen Gassack, mit einer Außenwand, die eine dem Insassen im aufgeblasenen Zustand zugewandte Frontseite, eine Rückseite und eine Umfangsseite hat sowie eine Einblasöffnung besitzt, wobei der aufgeblasene Gassack eine sich in Richtung zur Einblasöffnung erstreckende, tiefe, kanalförmige Einbuchtung hat, die nicht mit Druckgas gefüllt wird, und wobei zwischen der Einbuchtung und der Umfangsseite wenigstens eine mit Druckgas zu befüllende Ringkammer gebildet ist.

Derartige sogenannte Ringkammer-Gassäcke besitzen eine von außen, üblicherweise von der Frontseite ausgehende tiefe, zentrale Einbuchtung, die nicht mit Druckgas gefüllt wird. Ein solcher bekannter Gassack ist in Fig. 6 gezeigt. Diese Einbuchtung wird üblicherweise dadurch gebildet, daß ein Teil der Außenwand nach innen gestülpt ist und sein im aufgeblasenen Zustand tiefster Punkt an einer freien Bewegung nach außen gehindert wird. "Freie Bewegung" heißt nicht zwingend, daß dieser Teil des Gassacks an jeglicher Bewegung gehindert wird. Es wäre durchaus denkbar, diesen Teil des Gassacks mit einem kurzen Fangband zu versehen, welches eine geringfügige Bewegung beim Entfalten in Richtung Insassen zuläßt, dann jedoch den mit ihr verbundenen Abschnitt der Außenwand zurückhält, so daß sich die tiefe, kanalförmige Einbuchtung ergibt. Es ist bekannt, auf der Frontseite der Außenwand eine zusätzliche Gewebelage vorzusehen, die an ihrem Rand durch eine U-förmige Naht abschnittsweise an der Außenwand befestigt ist. Die Gewebelage kann zum Falten des Gassacks an ihrer offenen Seite so verschoben werden, daß die Einbuchtung offen ist, so daß ein feststehender Mittelteil der Modulabdeckung aus der Einbuchtung vor dem Aufblasen herausragt. Beim Entfalten gleitet der Gassack an diesem feststehenden Mittelteil der Abdeckung entlang. Anschließend kann sich die zusätzliche Gewebelage über die Einbuchtung schieben, und zwar vor die Einbuchtung (siehe Fig. 6), so daß dem Insassen an der Frontseite eine geschlossene Rückhaltefläche, ohne Einbuchtung entgegentritt.

Die Erfindung schafft einen Ring-Gassack, der sich durch ein geringeres Packvolumen auszeichnet.

Dies wird bei einem Gassack der eingangs genannten Art dadurch erreicht, daß entfernt vom frontseitigen Beginn der Einbuchtung wenigstens ein mit der Außenwand abschnittsweise verbundenes, flexibles Verschlußteil vorgesehen ist, das bei voll aufgeblasenem Gassack die Einbuchtung zumindest teilweise schließt.
Während beim Stand der Technik die an der Frontseite vorgesehene Gewebelage die Einbuchtung großflächig nach außen komplett abdeckt, ist bei der Erfindung vorgesehen, daß das Verschlußteil nicht vor der Einbuchtung, sondern im durch die Einbuchtung gebildeten tiefen Kanal liegt. Da sich die Einbuchtung zur Frontseite hin stark nach außen aufweitet, muß das Verschlußteil eine geringere flächenmäßige Ausdehnung besitzen, wenn es im Kanal selbst positioniert ist. Mit der geringeren flächenmäßigen Ausdehnung des Verschlußteils ist auch ein geringeres Packvolumen verbunden. Darüber hinaus sind nahe der Frontseite des Gassacks keine Nähte vorgesehen, die zur Sicherung einer gewissen Gasdichtigkeit besonders ausgeführt oder zusätzlich versiegelt werden. Ein weiterer Vorteil der Erfindung liegt darin, daß der obere Teil der Einbuchtung, vom Insassen aus gesehen, noch offen ist, bevor er durch das Verschlußteil, zumindest teilweise (vom Insassen aus gesehen) oder komplett geschlossen wird. Das heißt, die Rückhaltefläche, auf die der Insasse trifft, ist keine Ebene, sondern verläuft zur Mitte hin ins Innere des Gassacks hinein. Durch diese Geometrie kann der Insasse in gewissen Grenzen beim Eintauchen in den Gassack auch optimal positioniert werden, wobei das Verschlußteil aber ein zu tiefes Eintauchen verhindert.

Das Verschlußteil sollte im aufgeblasenen Zustand des Gassacks im äußeren Drittel der Einbuchtung liegen. Das bedeutet, man bestimmt die Tiefe der Einbuchtung von der Frontseite aus, und das Verschlußteil muß hierbei im äußeren Drittel, also demjenigen Drittel, welches dem Insassen am nächsten ist, liegen. Durch das Verschlußteil kann die gesamte Einbuchtung auch im Querschnitt klein gehalten werden, denn über das Verschlußteil können gegenüberliegende Abschnitte der die Einbuchtung begrenzenden Gassackwand auf festem Abstand zueinander gehalten werden.

Beim Falten des Gassacks kann das Verschlußteil vorzugsweise verschoben werden, um die (spätere) Einbuchtung freizugeben. Bei der Verschiebung wird ein innerer Einbuchtungsabschnitt freigegeben, der, bezogen auf den aufgeblasenen Zustand, den Kanalabschnitt definiert, welcher sich vom Verschlußteil zur Rückseite erstreckt.

Hierzu ist etwa das Verschlußteil so angeordnet, daß ein freier Rand des Verschlußteils im nicht oder nur wenig aufgeblasenen Zustand des Gassacks in einer radialen Richtung verschiebbar ist.

Eine Verschiebung des Verschlußteils kann auch im nur wenig aufgeblasenen Zustand, wie er auch während der Entfaltung des Gassacks durchlaufen wird, beabsichtigt sein, um das Verschlußteil in seine im aufgeblasenen Zustand des Gassacks eingenommene Position zu bringen.

Vorzugsweise ist das Verschlußteil eine separate Gewebelage, und zwar z.B. aus unbeschichtetem Gassackgewebe. Es sind natürlich auch Bänder, Folien oder Netze denkbar, die die vorgenannten Vorteile bieten können.

Üblicherweise besteht die Außenwand des Gassacks aus mehreren Gewebeteilen. Das Verschlußteil wird an der Außenwand nicht durch eine eigens vorgesehene Naht befestigt, sondern indem eine ohnehin schon vorhandene Naht verwendet wird, die Gewebeteile der Außenwand miteinander verbindet.

Eine solche Naht ist vorzugsweise diejenige, die ein die Frontseite und den Beginn der Einbuchtung bildendes Gewebeteil sowie ein den sich daran anschließenden Abschnitt der Einbuchtung bildendes Gewebeteil verbindet. Das Verschlußteil liegt in diesem Fall zwischen den beiden vorgenannten Gewebeteilen, so daß mit derselben Naht drei Teile miteinander verbunden werden.

Vorzugsweise sind mehrere nebeneinanderliegende Verschlußteile vorgesehen, und zwar so vorgesehen, daß eine vom Insassen aus gesehen symmetrische Geometrie aller Verschlußteile gebildet ist. Die Verschlußteile überlappen sich vorzugsweise im aufgeblasenen Zustand teilweise, um die Einbuchtung wenigstens teilweise zu schließen.

Der Begriff "Schließen" ist in diesem Zusammenhang nicht so zu verstehen, daß das Verschlußteil die Einbuchtung in gasströmungsmäßig voneinander getrennte Abschnitte teilt. Vielmehr ist damit gemeint, daß mit Blick von außen in die Einbuchtung diese im sich ergebenden Querschnitt nicht vollständig bis zum Grund der Einbuchtung offen ist.

Gemäß einer Ausführungsform sind wenigstens drei Verschlußteile vorgesehen.

Die Verschlußteile sind auf dem Umfang der Einbuchtung im Bereich ihrer Befestigung nebeneinander und sich dabei teilweise überlappend angeordnet.

Die Verschlußteile können bei entsprechender Lage und Ausführung das Aussehen einer zumindest annähernd geschlossenen Photoblende einnehmen.

Als besondere Formen der Verschlußteile haben sich Kreisscheibenabschnitte, insbesondere halbkreisförmige Scheiben oder sichelförmige Verschlußteile als vorteilhaft erwiesen.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine Längsschnittansicht durch einen erfindungsgemäßen Gassack in voll aufgeblasenem Zustand,
- Figur 2 eine vergrößerte Ansicht des mit X bezeichneten Bereichs in Figur 1,
- Figuren 3a bis 3d Draufsichten auf verschiedene Ausführungsformen der beim erfindungsgemäßen Gassack einsetzbaren Verschlußteile,
- Figuren 4a bis 4d Draufsichten auf verschiedene Varianten eines bei der Erfindung einsetzbaren Verschlußteils,
- Figuren 5a bis 5e beim Aufblasen aufeinanderfolgende Phasen einer Anordnung der Verschlußteile, von oben in die Einbuchtung gesehen, und
- Figur 6 eine Längsschnittansicht durch einen Gassack nach dem Stand der Technik in voll aufgeblasenem Zustand.

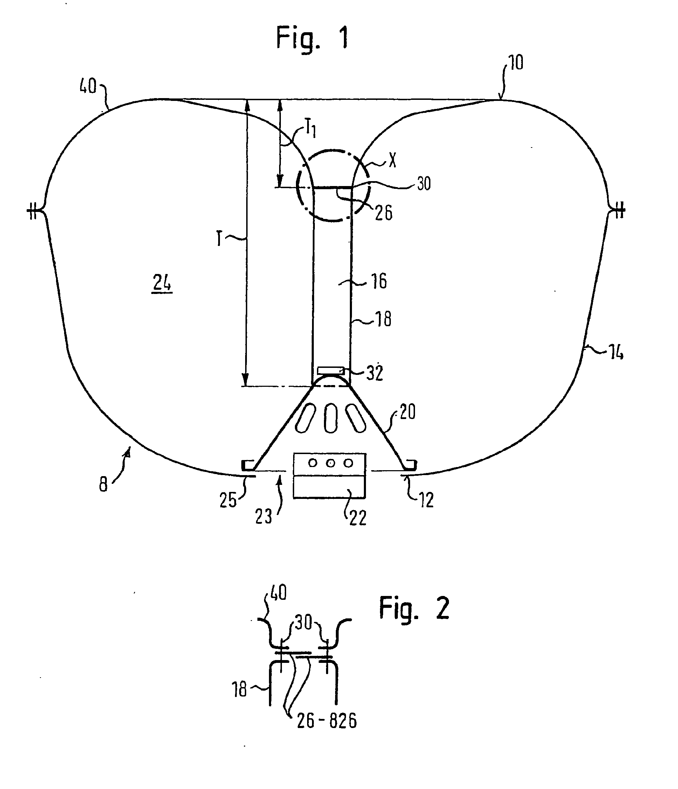

In Figur 1 ist ein Fahrergassackmodul mit einem Fahrer-Gassack 8 in voll aufgeblasenem Zustand gezeigt. Der Gassack 8 hat eine Außenwand, die eine Frontseite 10, eine Rückseite 12 und eine Umfangsseite 14 definiert und aus mehreren miteinander vernähten Gewebeteilen besteht, wie später noch genauer erläutert wird. Die Frontseite 10 ist dem Insassen zugewandt und besitzt eine tiefe, kanalförmige Einbuchtung 16, die sich zur Frontseite 10 hin aufweitet und die durch die Außenwand begrenzt ist. Die Einbuchtung 16 wird dadurch gebildet, daß ein Teil der Außenwand an einer ungehinderten Bewegung beim Aufblasen gehindert wird. Dies wird erzielt, indem ein Gewebeteil 18 an seinem unteren Ende (tiefster Punkt der Einbuchtung) an einem Diffusorkäfig 20 befestigt wird, in dem ein Gasgenerator 22 sitzt. Im Bereich des Gasgenerators 22 hat der Gassack eine Einblasöffnung 23, die von einem sogenannten Einblasmund 25 des Gassacks umgeben ist. Der Gasgenerator 22 ragt teilweise in die Einblasöffnung 23. Die Einbuchtung 16 erstreckt sich von der Frontseite 10 aus in Richtung zur Einblasöffung 23.

Die Außenwand begrenzt eine durch das im Gasgenerator 22 erzeugte Druckgas aufgeblasene Ringkammer 24, die innenseitig durch die Einbuchtung 16 begrenzt ist. In die Einbuchtung 16 selbst wird bewußt kein Druckgas eingeblasen, die Einbuchtung 16 wird vielmehr durch die Ringkammer 24 aufgespannt.

Die Einbuchtung 16 hat eine Tiefe T, die vom in Figur 1 obersten Punkt der Frontseite 10 (der von der durch den Einblasmund 25 aufgespannten Ebene entfernteste Punkt) bis zum tiefsten Punkt der Einbuchtung 16 gemessen wird. Die Einbuchtung 16 beginnt üblicherweise an dem obersten Punkt der Frontseite 10.

Deutlich entfernt vom frontseitigen Beginn der Einbuchtung 16 sind im Kanal mehrere aus Gewebematerial bestehende, flexible Verschlußteile 26 mit der Außenwand abschnittsweise verbunden. Die Verschlußteile 26 liegen, wie Figur 1 zu entnehmen ist, in etwa im Bereich des unteren Endes des äußeren Drittels der Einbuchtung bei der Tiefe T₁ (d.h. 3 x T₁ ist ungefähr T). Die Einbuchtung 16 verläuft unterhalb der Verschlußteile 26 im wesentlichen ohne Verengung oder Aufweitung etwa zylindrisch.

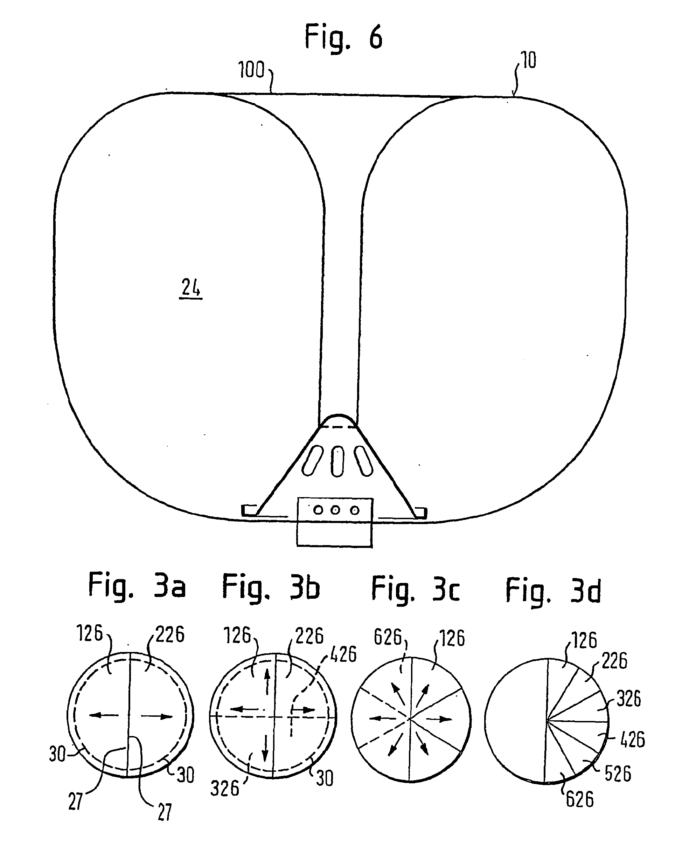

Die Verschlußteile 26 halten nicht nur die etwa gegenüberliegenden Abschnitte der Außenwand auf konstantem Abstand in radialer Richtung, sondern sorgen insgesamt dafür, daß die Einbuchtung 16 von oben gesehen im Bereich der Verschlußteile 26 weitgehend geschlossen ist. In den Figuren 3a bis 3d sind verschiedene Varianten und Anordnungen der Verschlußteile zu sehen.

In Figur 3a sind zwei Kreisscheibensegmente 126, 226, genauer Kreisscheibenhälften, nebeneinander angeordnet, so daß sie sich bei aufgeblasenem Gassack 8 zu einer geschlossenen Scheibe ergänzen können. Jedes Verschlußteil 126, 226 ist abschnittsweise, und zwar an seinem äußeren gekrümmten Rand über eine Naht 30 mit der Außenwand des Gassacks 8 verbunden. Zum Falten des Gassacks 8 können die Verschlußteile 126, 226 in der Mitte, also an ihren freien Rändern 27, wie durch die Pfeile dargestellt, nach außen, d.h. im wesentlichen in radialer Richtung, gezogen werden, so daß sie die Einbuchtung 16 freigeben. Dies hat den Vorteil, daß ein zentraler Abschnitt 32 der Abdeckkappe am Diffusorkäfig 20 bleibend befestigt sein kann.

Bei der Ausführungsform nach Figur 3b sind vier sich teilweise überlappende Verschlußteile 126 bis 426 um 90° versetzt zueinander angeordnet. Die Verschlußteile 126 bis 426 sind damit umfangsmäßig gleichmäßig voneinander beabstandet und überlappen sich gleichmäßig. Sie werden zum Falten nach außen gezogen (siehe Pfeile), so daß die Einbuchtung 16 wieder frei liegt. Auch hier ist nur eine Naht 30 vorgesehen, die alle Verschlußteile 126 bis 426 an der Außenwand befestigt. Die Verschlußteile 126 bis 426 sind, abgesehen von der Naht 30, nicht unmittelbar miteinander verbunden.

Bei der Ausführungsform nach Figur 3c sind sechs Verschlußteile 126 bis 626 fächerförmig teilweise übereinander und entsprechend umfangsmäßig sich teilweise überlappend angeordnet, bei der Ausführungsform nach Figur 3d sind sogar 12 Verschlußteile vorgesehen.

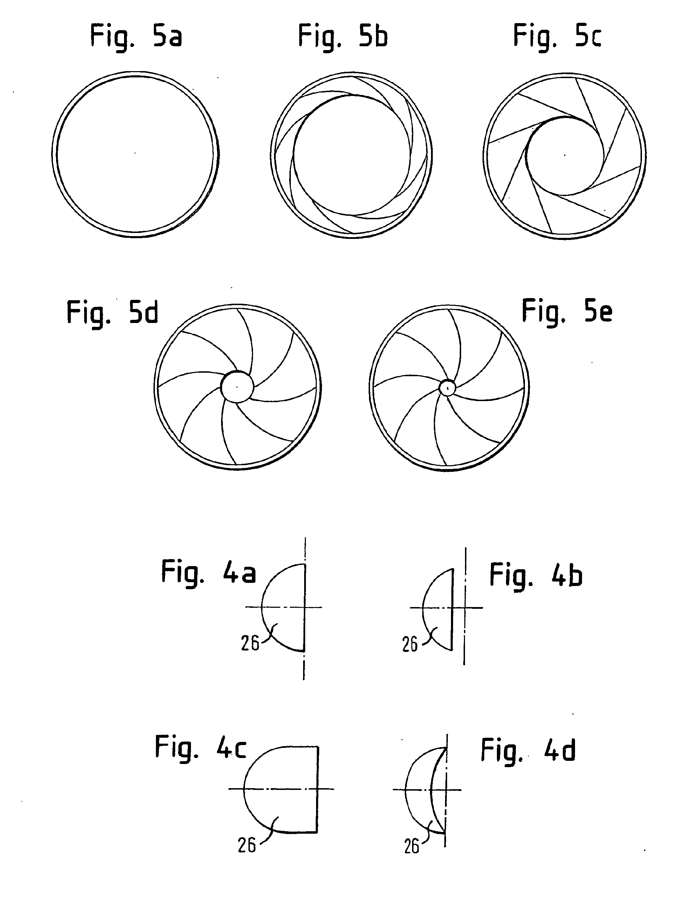

Die Verschlußteile 26 bis 626 wirken wie eine Fotoblende, die mit zunehmendem Aufblaszustand des Gassacks 8 immer weiter geschlossen wird, wie anhand der Figuren 5a bis 5e zu sehen ist.

Die Formen der einzelnen Verschlußteile 26 bis 626, die eingesetzt werden können, sind vielfältig. In Figur 4a ist ein Verschlußteil 26 dargestellt, welches die Form einer Kreisscheibenhälfte hat.

In Figur 4b ist das Verschlußteil 26 ein Kreissegment, wobei es eine geringere Fläche als die Kreisscheibenhälfte besitzt.

In Figur 4c ist das in Figur 4a gezeigte Verschlußteil 26 um einen rechteckigen Abschnitt verlängert, und in Figur 4d ist das Verschlußteil 26 sichelförmig. Sämtliche Verschlußteilformen sind beliebig mit den Anordnungen nach den Figuren 3a - d kombinierbar.

Für die Befestigung der Verschlußteile 26 an der Außenwand werden vorzugsweise keine zusätzlichen Nähte vorgesehen. Vielmehr werden die Verschlußteile 26 bis 626 zwischen zwei Gewebelagen positioniert, die ohnehin an einer geschlossenen Umfangsnaht 30 miteinander verbunden sind. Hierzu wird auf die Figuren 1 und 2 verwiesen, in denen ein die Vorderseite definierendes Gewebeteil 40 mit einem den unteren Teil der Einbuchtung 16 definierenden Gewebeteil 18 durch die Naht 30 vernäht werden. Zwischen den beiden Gewebelagen 40, 18 sind die Verschlußteile 26 bis 626 angeordnet.

Figur 6 zeigt den Stand der Technik, von dem die Erfindung ausgeht. Hier ist der Unterschied zur Lage der Verschlußteile gut zu erkennen. Gemäß Figur 6 ist auf der Frontseite 10 ein großflächiges Gewebeteil 100 im Bereich des obersten Abschnittes der Frontseite 10 an der Außenwand befestigt, so daß für den Insassen eine ebene Rückhaltefläche zur Verfugung steht, wogegen die Rückhaltefläche nach Figur 1 auch durch den obersten Teil der Einbuchtung 16 gebildet ist, wodurch der Insasse seitlich sehr gut lagefixiert wird.

## Patentansprüche

1. Gassack, mit einer Außenwand, die eine dem Insassen in aufgeblasenem Zustand zugewandte Frontseite (10), eine Rückseite (12) und eine Umfangsseite (14) hat,
wenigstens einer Einblasöffnung (23),
wobei der aufgeblasene Gassack (8) eine sich in Richtung zur Einblasöffnung (23) erstreckende, tiefe, kanalförmige Einbuchtung (16) hat, die nicht mit Druckgas gefüllt wird, und
wobei zwischen der Einbuchtung (16) und der Umfangsseite (14) wenigstens eine mit Druckgas zu befüllende Ringkammer (24) gebildet ist,
**dadurch gekennzeichnet, daß** entfernt vom frontseitigen Beginn der Einbuchtung (26) wenigstens ein mit der Außenwand abschnittsweise verbundenes, flexibles Verschlußteil (26 bis 626) vorgesehen ist, das bei voll aufgeblasenem Gassack (8) die Einbuchtung (26) zumindest teilweise schließt.

2. Gassack nach Anspruch 1, **dadurch gekennzeichnet, daß** das Verschlußteil (26 bis 626) beim Falten des Gassacks (8) zum Freilegen eines inneren Einbuchtungsabschnitts verschoben werden kann.

3. Gassack nach einem der vorhergehenden Ansprüche, **dadurch gekennzeichnet, daß** das Verschlußteil (26 bis 626) so angeordnet ist, daß ein freier Rand (27) des Verschlußteils (26 bis 626) in einem nicht aufgeblasenen Zustand des Gassacks (8) in einer radialen Richtung verschiebbar ist.

4. Gassack nach einem der vorhergehenden Ansprüche, **dadurch gekennzeichnet, daß** das Verschlußteil (26 bis 626) im aufgeblasenen Zustand des Gassacks im äußeren Drittel der Einbuchtung (16) liegt.

5. Gassack nach einem der vorhergehenden Ansprüche, **dadurch gekennzeichnet, daß** das Verschlußteil (26 bis 626) eine separate Gewebelage ist.

6. Gassack nach einem der vorhergehenden Ansprüche, **dadurch gekennzeichnet, daß** die Außenwand aus mehreren Gewebeteilen (40, 18) besteht und das Verschlußteil (26 bis 626) durch eine Gewebeteile (40, 18) der Außenwand miteinander verbindende Naht (30) an diesen Gewebeteilen (40, 18) befestigt ist.

7. Gassack nach Anspruch 5, **dadurch gekennzeichnet, daß** ein Gewebeteil (40) die Frontseite (10) und den Beginn der Einbuchtung (16) sowie ein Gewebeteil (18) den sich daran anschließenden Abschnitt der Einbuchtung (16) bildet und daß das Verschlußteil (26 bis 626) zwischen diesen Gewebeteilen (40, 18) mit vernäht ist.

8. Gassack nach einem der vorhergehenden Ansprüche, **dadurch gekennzeichnet, daß** mehrere nebeneinanderliegende Verschlußteile (26 bis 626) vorgesehen sind, die sich in aufgeblasenem Zustand des Gassacks teilweise überlappen, um die Einbuchtung (16) wenigstens teilweise zu schließen.

9. Gassack nach einem der vorhergehenden Ansprüche, **dadurch gekennzeichnet, daß** wenigstens drei Verschlußteile (26 bis 626) vorgesehen sind.

10. Gassack nach einem der vorhergehenden Ansprüche, **dadurch gekennzeichnet, daß** die Verschlußteile (26 bis 626) auf dem Umfang der Einbuchtung (16) nebeneinander und sich dabei überlappend angeordnet sind.

11. Gassack nach einem der vorhergehenden Ansprüche, **dadurch gekennzeichnet, daß** mehrere Verschlußteile vorgesehen sind, die bei aufgeblasenem Gassack die Gestalt einer geschlossenen Fotoblende einnehmen.

12. Gassack nach einem der vorhergehenden Ansprüche, **dadurch gekennzeichnet, daß** das oder die Verschlußteile (26 bis 626) die Form von Kreisscheibenabschnitten haben oder sichelförmig ausgebildet sind.
